(19) Europäisches Patentamt
European Patent Office
Office européen des brevets

(11) **EP 3 787 790 B1**

(12) **EUROPEAN PATENT SPECIFICATION**

(45) Date of publication and mention
of the grant of the patent:
**10.09.2025   Bulletin 2025/37**

(21) Application number: **19722764.8**

(22) Date of filing: **19.04.2019**

(51) International Patent Classification (IPC):
**B01J 35/64** *(2024.01)*     *C10G 45/54* *(2006.01)*
**B01J 29/04** *(2006.01)*     *C10G 45/52* *(2006.01)*

(52) Cooperative Patent Classification (CPC):
**B01J 29/043; B01J 35/643; B01J 35/647;
C10G 45/52; C10G 45/54**

(86) International application number:
**PCT/US2019/028288**

(87) International publication number:
**WO 2019/212765 (07.11.2019 Gazette 2019/45)**

(54) **A NOBLE METAL CATALYST COMPOSITION WITH AN IMPROVED AROMATIC SATURATION ACTIVITY AND ITS USE**

EDELMETALLKATALYSATORZUSAMMENSETZUNG MIT EINER AKTIVITÄT FÜR VERBESSERTE AROMATISCHE SÄTTIGUNG UND DEREN VERWENDUNG

COMPOSITION DE CATALYSEUR À MÉTAL NOBLE AYANT UNE ACTIVITÉ DE SATURATION AROMATIQUE AMÉLIORÉE ET SON UTILISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.05.2018   US 201862665087 P**

(43) Date of publication of application:
**10.03.2021   Bulletin 2021/10**

(73) Proprietor: **ExxonMobil Technology and
Engineering Company
Spring, TX 77389 (US)**

(72) Inventors:
• **IDE, Matthew, S.**
**Doylestown, PA 18902 (US)**
• **LAI, Wenyih, Frank**
**Bridgewater, NJ 08807 (US)**
• **GUNTHER, William, Robert**
**Clinton, NJ 08809 (US)**
• **ZHANG, Lei**
**Basking Ridge, NJ 07920 (US)**
• **KOEHLE, Maura, A.F.**
**Somerville, NJ 08876 (US)**

(74) Representative: **ExxonMobil Petroleum &
Chemical BV
IP Law Europe
Hermeslaan 2
1831 Machelen (BE)**

(56) References cited:
EP-A1- 2 092 980       WO-A1-2017/102645
US-A1- 2009 206 004    US-A1- 2009 215 612
US-A1- 2016 229 959    US-A1- 2017 354 961

**Description**

<u>FIELD</u>

This invention relates to the use of an inorganic, porous, mesoporous binder material that comprises at least silica and alumina for the preparation of a metal-containing catalyst composition suitable for use in the hydroprocessing of hydrocarbon feedstreams. More particularly, the present invention provides a catalyst composition showing an improved aromatic saturation activity.

<u>BACKGROUND</u>

Lubricating oil products for use in applications such as automotive engine oils have used additives to improve specific properties of the base stocks used to prepare the finished products. With the advent of increased environmental concerns, the performance requirements for the base stocks themselves have increased. American Petroleum Institute (API) requirements for Group II base stocks include a saturates content of at least 90%, a sulfur content of 0.03 wt% or less and a viscosity index (VI) between 80 and 120. Currently, there is a trend in the lube oil market to use Group II base stocks instead of Group I base stocks in order to meet the demand for higher quality base stocks that provide for increased fuel economy, reduced emissions, etc.

Conventional techniques for preparing base stocks such as hydrocracking or solvent extraction require severe operating conditions such as high pressure and temperature or high solvent to oil ratios and high extraction temperatures to reach these higher base stock qualities. Hydrocracking has been combined with hydrotreating as a preliminary step. However, this combination also results in decreased yields of lubricating oils due to the conversion to distillates that typically accompany the hydrocracking process.

In U.S. Pat. No. 5,573,657, a hydrogenation catalyst, and process using the same, is described wherein a mineral oil based lubricant is passed over a mesoporous crystalline material, exemplary with a support, containing a hydrogenation metal function. The supported mesoporous material has pore diameters greater than 200 Angstroms (Å). The hydrogenation process is operated such that the product produced therein has a low degree of unstaturation.

Aromatic saturation improves lubricant quality by providing excellent color and oxidation stability required for Group II and III base stocks. Currently, a lube production plant typically requires several aromatic saturation catalysts before and after the dewaxing catalyst in order to adequately saturate aromatics. The pre-treatment, or aromatics saturation catalyst before the dewaxing catalyst, can suffer from rapid deactivation at high temperature, however, requiring catalyst replacement every 2-3 years, while the dewaxing catalyst lasts significantly longer. In addition, the post-treatment, or hydrofinishing catalyst, typically is responsible for the final hydrogenation of high molecular weight polynuclear aromatics (PNA's) that sets the aromatic content and color of the final lubricant oil. The aromatic content of lubricant oil often sets the unit EOR (end or run) conditions. An increase in aromatic saturation activity may eliminate or reduce the need for the additional pre-treatment catalyst, enable increased run length, and lower the operation temperatures. The decreased reactor temperature could prevent equilibrium from limiting aromatic conversion and minimize yield debit from cracking, both which lead to a decrease in base stock performance.

<u>SUMMARY</u>

The present invention provides the use of an inorganic, porous, mesoporous binder material that comprises at least silica and alumina for the preparation of a catalyst composition used in the hydroprocessing of hydrocarbon feedstreams according to an embodiment of the present invention. The catalyst composition comprises: a) an inorganic, porous, mesoporous binder material, wherein the binder material comprises at least silica and alumina; b) a supported material, wherein the supported material has a framework comprising silica and alumina in a molar ratio of silica to alumina of 10:1 to 50:1, and has an average pore diameter of 15 to 40 Å, as measured by physisorption measurement, and has, in its calcined form, a X-ray diffraction pattern that has no peaks at positions less than 10 Å d-spacing with relative intensity greater than 10% of the strongest peak and has at least one peak with a d-spacing that corresponds to the $d_{100}$ value of the electron diffraction pattern of the material; and c) a hydrogenation-dehydrogenation component, which is selected from the Group VIII noble metals and mixtures thereof; wherein the catalyst composition has a collidine uptake at 200°C of greater than 150 $\mu$mol/g, 200 $\mu$mol/g, or 300 $\mu$mol/g, or 350 $\mu$mol/g. In some embodiments, the catalyst composition is modified with sulfate or $XO_2$, or $X_2O_5$, wherein X is selected from a Group IV metal. According to a further embodiment of the invention, the supported material is MCM-41.

The catalyst composition may be used in an aromatics hydrogenation process for a hydrocarbon feedstream, wherein the process comprises: a) contacting a hydrocarbon feedstream that contains aromatics with the above catalyst composition in the presence of a hydrogen-containing treat gas under effective aromatics hydrogenation conditions; and b) obtaining a hydro-treated product. In various embodiments of the invention, the hydro-treated product has an aromatics content at least 90%, or 95%, or 97% lower than an aromatics content of the hydrocarbon feedstream.

DETAILED DESCRIPTION

The present inventors recognized that there is a need in the industry for an effective catalyst composition to produce quality base stocks, particularly base stocks with improved aromatic saturation. The present inventors unexpectedly discovered such catalyst composition and methods for using the composition to prepare base stocks with improved aromatic saturation activity. The present invention provides a catalyst composition used in the hydroprocessing of hydrocarbon feedstreams. The hydroprocessing catalyst composition comprises a binder material, a supported material and a hydrogenation-dehydrogenation component as defined below in some embodiments. The present invention further provides an aromatics hydrogenation process for a hydrocarbon feedstream by utilizing the catalyst composition under effective aromatics hydrogenation conditions. The hydro-treated product may have an aromatics content at least 90%, or 95%, or 97% lower than the aromatics content of the hydrocarbon feedstream.

**Binder Materials**

"Binder materials" as used herein, comprise at least silica and alumina (interchangeably used with "silica-alumina" or "SiAl"). In some embodiments, the binder material is an inorganic, porous, mesoporous silica-alumina. Binder materials of the present invention are selected from any silica-alumina binder material known that is resistant to temperatures and other conditions employed in processes using the present invention. Silica-alumina may be either naturally occurring or in the form of gelatinous precipitates or gels including mixtures of silica and metal oxides.
In some embodiments, the binder materials are one or more of silica doped alumina, alumina doped silica, silicoaluminate, and any mixture thereof.
In an embodiment, silica doped alumina is used. Silica is either homogeneously distributed in all or part of alumina pores, or doped on the surface layer of alumina particles.
More specifically, silica doped alumina is made by one or more of the following methods:

(a) A silica source is added during the precipitation of soluble aluminum salts, followed by crystallization to form Boehmite, which may be then calcined to form the silica doped transition phase alumina, e.g., gamma-alumina, eta-alumina, theta-alumina, alpha-alumina, etc.;
(b) A silica bearing source is impregnated on an alumina substrate, e.g., amorphous alumina, pseudo-crystalline alumina or crystalline alumina, followed with calcination at high temperature.
(c) A silica bearing source is mixed with aluminum chlorohydrate (ACH), or aluminum nitrohydrate (ACN), and allowed to react, followed with calcinations;
(d) Silica doping is done on an alumina substrate that has been treated with a pore regulating agent (PRA) and has meso/macroporous structure. Alternatively, the doping is done simultaneously with the application of the PRA on the alumina substrate followed with calcinations;
(e) The source of alumina is a low cost one, such as but not limited to, Bauxite, Gibbsite, flush calcined Gibbsite, etc.;
(f) The source of silica is sodium silicate, silicic acid, polysilicic acid, colloidal silica, silica gel, silica containing compounds, tetraethylorthosilicate (TEOS), etc.;
(g) Calcinations and/or steaming is used to fix the silica on the alumina substrate, and to optimize the silica to alumina ratio, acidity, particle size distribution, etc. of the doped alumina;
(h) Solid state thermal reactions are used to dope alumina with silica. For example, a Gibbsite alumina is mixed with fine powder "Cabosil" silica, milled to obtain a homogeneous dispersion of the two powders and calcined, to produce a silica doped transition phase alumina. A PRA is included during the milling as well; and
(i) More than one dopant is included, such as alkaline earth metals, transition metals and rare earth metals. For example, Ca, Mg, and/or La is used to stabilize the silica to alumina ratio, and/or porosity of the aluminum substrate, such that no substantial changes occur with the thermal aging during catalytic service.

In another embodiment, alumina is doped on the silica surface to make alumina doped silica. For example, isolated alumina is highly dispersed in and has a strong interaction with silica. Alumina doped silica is made by one or more of the following methods:

(a) An alumina source is added during the precipitation of soluble silica salts, followed by crystallization and calcination;
(b) An alumina bearing source is impregnated on a silica substrate which is amorphous silica, pseudo-crystalline silica or crystalline silica, followed with calcination at high temperature;
(c) An alumina bearing source is mixed with silica sol or gel, and allowed to react, followed with calcinations;

(d) Alumina doping is done on a silica substrate that has been treated with a PRA and has meso/macroporous structure. Alternatively, the doping is done simultaneously with the application of the PRA on the silica substrate followed with calcinations;

(e) The source of alumina is a low cost one, such as but not limited to, Bauxite, Gibbsite, flush calcined Gibbsite, etc.;

(f) The source of silica is sodium silicate, silicic acid, polysilicic acid, colloidal silica, silica gel, silica containing compounds, TEOS, etc.;

(g) Calcinations and/or steaming are used to fix the alumina on the silica substrate, and optimize the silica to alumina ratio, acidity, particle size distribution, etc. of the doped silica; and

(h) More than one dopant is included, such as alkaline earth metals, transition metals and rare earth metals. For example, Ca, Mg, and/or La is used to stabilize the silica to alumina ratio, and/or porosity of the aluminum substrate, such that no substantial changes occur with the thermal aging during catalytic service.

The silica doped alumina, alumina doped silica, and silicoaluminate as described above is either used alone or in mixtures. In some embodiments, the binder material is further modified with sulfate, $XO_2$, or $X_2O_5$, wherein X is selected from the Group IV metal. In some embodiments, X is selected from the group consisting of niobium, zirconium, and mixtures thereof.

In various embodiments, the silica doped alumina, alumina doped silica, and/or silicoaluminate matrices are synthesized with controlled porosity and/or acid site density.

In some embodiments, the pore structure of the silica-alumina has a pore size (e.g., diameters) ranging from about 20 to about 5,000 Angstroms, from about 100 to about 5,000 Angstroms, from about 200 to about 2,000 Angstroms, from about 100 to about 2,000 Angstroms, from about 500 to about 5,000 Angstroms, or from about 300 to about 10,000 Angstroms, or larger or smaller. For example, the silica-alumina has mesoporosity (e.g., pore diameter of about 20 Angstroms to about 500 Angstroms) or macroporosity (e.g., pore diameter of larger than about 500 Angstroms), or a mixed meso/macroporosity.

In some embodiments, the binder material has a collidine uptake at 200°C of greater than 100 μmol/g, 120 μmol/g, 150 μmol/g, or 200 μmol/g, or 250 μmol/g, or 300 μmol/g, or 400 μmol/g, or 450 μmol/g, or 500 μmol/g, or 550 μmol/g, or 600 μmol/g, or in a range of from 100 to 800 μmol/g, or from 100 to 700 μmol/g, or from 100 to 500 μmol/g, or from 100 to 400 μmol/g, from 100 to 300 μmol/g.

In some embodiments, supported materials are composited or with the binder materials to form a finished catalyst extrudate onto which metals are added. The present invention typically comprises, in a composited form, a ratio of supported material to binder material ranging from about 95 parts supported material to 5 parts binder material to 5 parts supported material to 95 parts binder material, all ratios being by weight, such as from 80:20 to 20:80 supported material to binder material, or from 65:35 to 35:65. Compositing may be done by conventional means including mulling the materials together followed by extrusion or pelletizing into the desired finished catalyst particles.

## Supported Materials

The catalyst composition provided by the use of the invention is suitable for use in the hydroprocessing of lubricating oil feedstreams. The catalyst composition comprises an inorganic, porous, non-layered, crystalline, mesoporous supported material optionally bound with a suitable binder material. The framework of the supported material comprises at least aluminum and silica, and the supported material is further characterized as having an average pore diameter of 15 to less than 40 Å. The catalyst also comprises a hydrogenation-dehydrogenation component selected from the Group VIII noble metals and mixtures thereof.

In their calcined form, supported materials having characteristics similar to those suitable for use herein generally have a high ratio of silica to aluminum in their framework. Generally, these materials have a ratio of silica to aluminum in their framework on the order of about 800:1. The higher ratios of silica to aluminum were used to prevent undesirable cracking reactions. However, the inventors hereof have unexpectedly discovered that increasing the amount of aluminum incorporated into the framework, coupled with smaller pore sizes discussed below, provides a catalyst that has improved aromatics saturation capabilities.

Thus, supported materials suitable for use in the in the present invention include synthetic compositions of matter comprising an ultra-large pore size crystalline phase. Suitable supported materials are inorganic, porous, non-layered crystalline phase materials that are characterized (in their calcined form) by an X-ray diffraction pattern with at least one peak at a d-spacing greater than about 18 Å with a relative intensity of 100. The supported materials suitable for use herein are also characterized as having a benzene sorption capacity greater than 15 grams of benzene per 100 grams of the material at 50 torr (6.67 kPa) and 25°C. Examples of supported materials are inorganic, porous, non-layered material having a hexagonal arrangement of uniformly-sized pores with a maximum perpendicular cross-section pore dimension of about 15 to less than about 40 Å. An example of supported material is identified as MCM-41. MCM-41 has a characteristic structure of hexagonally-arranged, uniformly-sized pores of at least 13 Å diameter, exhibits a hexagonal electron diffraction pattern that is indexed with a $d_{100}$ value greater than about 18 Å, which corresponds to at least one peak in the X-ray diffraction pattern. MCM-41 is described in U.S. Pat. Nos. 5,098,684 and 5,573,657.

The inorganic, non-layered mesoporous crystalline supported materials used as components in the present invention have a composition according to the formula $M_{n/q}(W_a X_b Y_c Z_d O_h)$. In this formula, W is a divalent element, selected from divalent first row transition metal, exemplary manganese, cobalt, iron, and/ or magnesium. X is a trivalent element, exemplary aluminum, boron, iron and/or gallium. Y is a tetravalent element such as silicon and/or germanium. Z is a pentavalent element, such as phosphorus. M is one or more ions, such as, for example, ammonium, Group IA, IIA and VIIB ions, usually hydrogen, sodium and/or fluoride ions. "n" is the charge of the composition excluding M expressed as oxides; q is the weighted molar average valence of M; n/q is the number of moles or mole fraction of M; a, b, c, and d are mole fractions of W, X, Y and Z, respectively; h is a number of from 1 to 2.5; and (a+b+c+d) =1. In an embodiment of supported materials suitable for use herein, (a+b+c) is greater than d, and h=2. Another further embodiment is when a and d=0, and h=2. Exemplary materials for use in making the supported materials suitable for use herein are the aluminosilicates although other metallosilicates may also be used.

As stated above, the supported materials suitable for use herein have a higher concentration of aluminum incorporated into their framework then those used prior to the present invention. Thus, supported materials suitable for use herein have a framework silica to aluminum ratio of about 10:1 to about 100: 1, or about 10:1 to about 50: 1, or 25:1 to about 70:1, or about 30:1 to about 60:1, or about 45:1 to about 55:1.

In the as-synthesized form, the supported materials suitable for use herein have a composition, on an anhydrous basis, expressed empirically by the formula $rRM_{n/q} (W_a X_b Y_c Z_a O_h)$, where R is the total organic material not included in M as an ion, and r is the coefficient for R, i.e., the number of moles or mole fraction of R. The M and R components are associated with the material as a result of their presence during crystallization, and are easily removed or, in the case of M, replaced by post-crystallization methods described below. To the extent desired, the original M, e.g., sodium or chloride, ions of the as-synthesized material of this invention is replaced in accordance with conventional ion-exchange techniques. Exemplary replacing ions include metal ions, hydrogen ions, hydrogen precursor, e. g., ammonium, ions and mixtures of these ions. These include hydrogen, rare earth metals and metals of Groups VIIA (e.g., Mn), VIIIA (e.g., Ni), IB (e.g., Cu), IVB (e. g., Sn) of the Periodic Table of the Elements and mixtures of these ions.

The crystalline (i.e., having sufficient order to provide a diffraction pattern such as, for example, by X-ray, electron or neutron diffraction, following calcination with at least one peak) mesoporous supported materials are characterized by their structure, which includes extremely large pore windows as well as by its high sorption capacity. The term "mesoporous", as used herein, is meant to indicate crystals having uniform pores within the range of from about 13 Å to about 200 Å. It should be noted that "porous", as used herein, is meant to refer to a material that adsorbs at least 1 gram of a small molecule, such as Ar, $N_2$, n-hexane or cyclohexane, per 100 grams of the porous material. As stated above, the present invention is characterized as using a supported material having an average pore diameter of about 15 to less than about 40 Å, or about 15 to about 35 Å, or about 20 to about 30 Å, or about 23 to about 27 Å. The pore size of the present invention is one key feature of the instant invention because the inventors hereof have unexpectedly found that by limiting the average pore diameter of the present invention to within this range, the aromatics saturation performance of the current invention is greatly improved.

The supported materials suitable for use herein are distinguished from other porous inorganic solids by the regularity of their large open pores, whose pore size more nearly resembles that of amorphous or para-crystalline materials, but whose regular arrangement and uniformity of size (pore size distribution within a single phase of, for example, ±25%, usually ±15% or less of the average pore size of that phase) resemble more those of crystalline framework materials such as zeolites. Thus, supported materials for use herein can also be described as having a hexagonal arrangement of large open channels that is synthesized with open internal diameters from about 15 to less than about 40 Å, or about 15 to about 35 Å, or about 20 to about 30 Å, or about 23 to about 27 Å.

The term "hexagonal", as used herein, is intended to encompass not only materials that exhibit mathematically perfect hexagonal symmetry within the limits of experimental measurement, but also those with significant observable deviations from that ideal state. Thus, "hexagonal" as used to describe the supported materials suitable for use herein is meant to refer to the fact that most channels in the material would be surrounded by six nearest neighbor channels at roughly the same distance. It should be noted, however, that defects and imperfections in the supported material will cause significant numbers of channels to violate this criterion to varying degrees, depending on the quality of the material's preparation. Samples which exhibit as much as ±25% random deviation from the average repeat distance between adjacent channels still clearly give recognizable images of the MCM-41materials. Comparable variations are also observed in the $d_{100}$ values from the electron diffraction patterns.

The supported materials suitable for use herein are prepared by any means known in the art, and are generally formed by the methods described in U.S. Pat. Nos. 5,098,684 and 5,573,657. Generally, the most regular preparations of the supported material give an X-ray diffraction pattern with a few distinct maxima in the extreme low angle region. The positions of these peaks approximately fit the positions of the hkO reflections from a hexagonal lattice. The X-ray diffraction pattern, however, is not always a sufficient indicator of the presence of these materials, as the degree of regularity in the microstructure and the extent of repetition of the structure within individual particles affect the number of peaks that will be observed. Indeed, preparations with only one distinct peak in the low angle region of the X-ray diffraction pattern have been found to contain substantial amounts of the material in them. Other techniques to illustrate the microstructure of this material are transmission electron microscopy and electron diffraction. Properly oriented specimens of suitable supported materials show a hexagonal arrangement of large channels and the corresponding electron diffraction pattern gives an approximately hexagonal arrangement of diffraction maxima. The $d_{100}$ spacing observed in the electron diffraction patterns corresponds to the d-spacing of a low angle peak in the X-ray diffraction pattern of the suitable supported material. The most highly ordered preparations of the suitable supported material obtained so far have 20-40 distinct spots observable in the electron diffraction patterns. These patterns are indexed with the hexagonal hkO subset of unique reflections of 100, 110, 200, 210, etc., and their symmetry-related reflections.

In its calcined form, supported materials suitable for use herein may also be characterized by an X-ray diffraction pattern with at least one peak at a position greater than about 18 Å d-spacing (4.909° 2θ for Cu K-alpha radiation), which corresponds to the $d_{100}$ value of the electron diffraction pattern of the supported material. Also, as stated above, suitable supported materials display an equilibrium benzene adsorption capacity of greater than about 15 grams benzene/100 grams crystal at 50 torr (6.67 kPa) and 25°C.

It should be noted that the equilibrium benzene adsorption capacity characteristic of suitable supported materials is measured on the basis of no pore blockage by incidental contaminants. For example, the sorption test will be conducted on the crystalline material phase having no pore blockage contaminants and water removed by ordinary methods. Water may be removed by dehydration techniques, e.g., thermal treatment. Pore blocking inorganic amorphous materials, e.g., silica, and organics may be removed by contact with acid or base or other chemical agents such that the detrital material will be removed without detrimental effect on the crystal. In a further embodiment, the calcined, crystalline, non-layered supported materials suitable for use herein are characterized by an X-ray diffraction pattern with at least two peaks at positions greater than about 10 Å d-spacing (8.842°2θ for Cu K-alpha radiation), which corresponds to the $d_{100}$ value of the electron diffraction pattern of the supported material, at least one of which is at a position greater than about 18Å d-spacing, and no peaks at positions less than about 10 Å d-spacing with relative intensity greater than about 20% of the strongest peak. The X-ray diffraction pattern of the calcined material of this invention will have no peaks at positions less than 10 Å d-spacing with relative intensity greater than 10% of the strongest peak. In any event, at least one peak in the X-ray diffraction pattern will have a d-spacing that corresponds to the $d_{100}$ value of the electron diffraction pattern of the material.

The calcined, inorganic, non-layered, crystalline supported materials suitable for use herein is also be characterized as having a pore size of 15 to less than 40 Å or greater as measured by physisorption measurements. It should be noted that pore size, as used herein, is to be considered a maximum perpendicular cross-section pore dimension of the crystal.

As stated above, the supported materials suitable for use herein is prepared by any means known in the art, and are generally formed by the methods described in U.S. Pat. Nos. 5,098,684 and 5,573,657.

The supported materials suitable for use herein is shaped into a wide variety of particle sizes. Generally speaking, the supported material particles is in the form of a powder, a granule, or a molded product, such as an extrudate having particle size sufficient to pass through a 2 mesh (Tyler) screen and be retained on a 400 mesh (Tyler) screen. In cases where the final catalyst is to be molded, such as by extrusion, the supported material particles are extruded before drying or partially dried and then extruded.

The size of the pores in the present supported materials are controlled such that they are large enough that the spatiospecific selectivity with respect to transition state species in reactions such as cracking is minimized (Chen et al., "Shape Selective Catalysis in Industrial Applications", 36 CHEMICAL INDUSTRIES, pgs. 41-61 (1989), to which reference is made for a discussion of the factors affecting shape selectivity). It should also be noted that diffusional limitations are also minimized as a result of the very large pores.

In some embodiments, the supported material has a collidine uptake at 200°C of greater than 100 μmol/g, 120 μmol/g, 150 μmol/g, or 200 μmol/g, or 250 μmol/g, or 300 μmol/g, or 400 μmol/g, or 450 μmol/g, or 500 μmol/g, or 550 μmol/g, or 600 μmol/g, or in a range of from 150 to 800 μmol/g, or from 150 to 700 μmol/g, or from 150 to 500 μmol/g, or from 150 to 400 μmol/g, from 150 to 300 μmol/g.

**Catalyst Compositions**

As stated above, in addition to the binder materials and supported materials, the present catalyst composition further comprises a hydrogenation-dehydrogenation component selected from Group VIII noble metals and mixtures thereof. In some embodiments, the hydrogenation-dehydrogenation component is selected from palladium, platinum, rhodium, iridium, and mixtures thereof, or is selected from platinum, palladium, and mixtures thereof, or is selected from platinum and palladium.

The hydrogenation-dehydrogenation component is typically present in an amount ranging from about 0.1 to about 2.0 wt%, or from about 0.2 to about 1.8 wt%, or 0.3 to about 1.6 wt%, or 0.4 to about 1.4 wt%. All metals weight percentage is on support. By "on support" we mean that the percentage is based on the weight of the support, i.e., the composited supported material and binder material. For example, if the support were to weigh 100 grams then 20 wt% hydrogenation-dehydrogenation component would mean that 20 grams of the hydrogenation-dehydrogenation metal was on the support.

The hydrogenation-dehydrogenation component is exchanged onto the supported material, impregnated into it or physically admixed with it. It is exemplary that the hydrogenation/dehydrogenation component be incorporated by impregnation. If the hydrogenation-dehydrogenation component is to be impregnated into or exchanged onto the composited supported material and binder, it may be done, for example, by treating the composite with a suitable ion containing the hydrogenation-dehydrogenation component. If the hydrogenation-dehydrogenation component is platinum, suitable platinum compounds include chloroplatinic acid, platinous chloride and various compounds containing the platinum amine complex. The hydrogenation-dehydrogenation component may also be incorporated into, onto, or with the composited support and binder material by utilizing a compound(s) wherein the hydrogenation-dehydrogenation component is present in the cation of the compound and/or compounds or in which it is present in the anion of the compound(s). It should be noted that both cationic and anionic compounds are used. Non-limiting examples of suitable palladium or platinum compounds in which the metal is in the form of a cation or cationic complex are $Pd(NH_3)_4Cl_2$ or $Pt(NH_3)_4Cl_2$ are particularly useful, as are anionic complexes such as the vanadate and metatungstate ions. Cationic forms of other metals are also very useful since they may be exchanged onto the crystalline material or impregnated into it.

The catalyst composition has a collidine uptake at 200°C of greater than 150 $\mu$mol/g, or 200 $\mu$mol/g, or 250 $\mu$mol/g, or 300 $\mu$mol/g, or 350 $\mu$mol/g, or 400 $\mu$mol/g, or 450 $\mu$mol/g, or 500 $\mu$mol/g, or 550 $\mu$mol/g, or 600 $\mu$mol/g, or in a range of from greater than 150 to 800 $\mu$mol/g, or from greater than 150 to 700 $\mu$mol/g, or from 200 to 700 $\mu$mol/g, or from 200 to 600 $\mu$mol/g, from 250 to 600 $\mu$mol/g.

In some embodiments, the catalyst composition is further modified with sulfate, $XO_2$, or $X_2O_5$, wherein X is selected from the Group IV metal. In some embodiments, X is selected from the group consisting of niobium, zirconium, and mixtures thereof.

## Aromatics Hydrogenation Process

An aromatics hydrogenation process for a hydrocarbon feedstream, wherein the process comprises: a) contacting a hydrocarbon feedstream that contains aromatics with the above disclosed hydrogenation catalyst composition in the presence of a hydrogen-containing treat gas under effective aromatics hydrogenation conditions, and b) obtaining a hydro-treated product. In some embodiments, the hydro-treated product has an aromatics content that is less than 50%, or 40%, or 30%, or 20%, or 10%, or 5% of the aromatics content of the hydrocarbon feedstream.

In various embodiments, the effective hydrogenation conditions comprise: a temperature from about 50°C to about 600°C, or 50°C to about 500°C, or 60°C to about 450°C, or 75°C to about 425°C, or 75°C to about 425°C; a hydrogen partial pressure from about 50 psig to about 4000 psig, or 80 psig to about 3500 psig, or 90 psig to about 3000 psig, or 100 psig to about 3000 psig; a liquid hourly space velocity from about 0.01 hr$^{-1}$ to about 10 hr$^{-1}$ LHSV, or about 0.05 hr$^{-1}$ to about 8 hr$^{-1}$ LHSV, or about 0.1 hr$^{-1}$ to about 8 hr$^{-1}$ LHSV, or about 0.1 hr$^{-1}$ to about 5 hr$^{-1}$ LHSV; and a hydrogen treat gas rate of from about 20 m$^3$/m$^3$ to about 2000 m$^3$/m$^3$, or about 30 m$^3$/m$^3$ to about 1800 m$^3$/m$^3$, or about 35.6 m$^3$/m$^3$ to about 1800 m$^3$/m$^3$, or about 35.6 m$^3$/m$^3$ to about 1781 m$^3$/m$^3$.

A wide range of petroleum and chemical feedstocks (or feeds) are suitable as a hydrocarbon feedstream (or part of a hydrocarbon feedstream) of the present invention. According to various embodiments, various petroleum and/or chemical feedstocks (or feeds) or combinations thereof are suitable for processing by exposing the feedstock (or feed) to an alumina-modified catalyst under effective conditions for hydrogenation and/or aromatic saturation in accordance with the invention. Suitable hydrocarbonaceous feedstocks (or feeds) can include raw or virgin feeds as well as feeds that have previously been processed (such as hydroprocessed) in one or more reaction stages. Examples of suitable hydrocarbonaceous feedstocks include, but are not limited to, whole and reduced petroleum crudes, atmospheric and vacuum residua, propane deasphalted residua, e.g., brightstock, cycle oils, FCC tower bottoms, gas oils, including vacuum gas oils and coker gas oils, light to heavy distillates including raw virgin distillates, hydrocrackates, hydrotreated oils, slack waxes, Fischer-Tropsch waxes, feeds derived from biological sources, raffinates, naphtha boiling range fractions (boiling range of about 36°C or about the boiling point of n-pentane to about 177°C), hydrotreated naphtha boiling range fractions, diesel or other distillate fuel boiling range fractions (about 177°C to about 370°C), hydrotreated diesel or other distillate fuel boiling range fractions, lubricant base oil boiling range fractions (about 370°C to about 538°C), hydrotreated lubricant base oil boiling range fractions, and mixtures of these materials.

The feedstock may be selected based on the boiling range of the feed. One option for defining a boiling range is to use an initial boiling point for a feed and/or a final boiling point for a feed. Another option, which in some instances may provide a more representative description of a feed, is to characterize a feed based on the amount of the feed that boils at one or more temperatures. For example, a "T5" boiling point for a feed is defined as the temperature at which 5 wt% of the feed will boil off. Similarly, a "T95" boiling point is a temperature at which 95 wt% of the feed will boil. It is noted that the boiling ranges noted above can correspond to boiling ranges defined by initial and final boiling points, T5 and T95 boiling points, T10 and T90 boiling points, or combinations thereof. For example, the lubricant base oil boiling range can correspond to an initial, T5, or T10 boiling point of about 370°C and a final, T95, or T90 boiling point of about 538°C. Similarly, the diesel boiling range is an initial, T5, or T10 boiling point of about 177°C and a final, T95, or T90 boiling point of about 370°C. Boiling points, including fractional weight boiling points, are determined using a suitable ASTM method, such as ASTM D2887. For samples that include compounds that cannot be readily characterized using ASTM D2887, an alternative appropriate ASTM method is used instead, such as ASTM D1160 or ASTM D86.

The sulfur content of the feed is any convenient amount, but less than 1000 wppm. In some aspects, the sulfur content of a feed exposed to the hydrogenation catalyst is about 100 wppm or less, or about 50 wppm or less, or about 25 wppm or less, or about 15 wppm or less. In some aspects, the sulfur content of a feed exposed to a hydrogenation catalyst is from 0 wppm to less than 1000 wppm, or about 500 wppm or less, or about 300 wppm or less. Examples of ranges for sulfur content can include about 30 wppm to less than 1000 wppm, or about 50 wppm to less than 1000 wppm, or about 100 wppm to less than 1000 wppm, or about 200 wppm to less than 1000 wppm, or about 250 wppm to less than 1000 wppm, or about 30 wppm to about 500 wppm, or about 50 wppm to about 500 wppm, or about 100 wppm to about 500 wppm, or about 200 wppm to about 500 wppm, or about 250 wppm to about 500 wppm, or about 10 wppm to less than 1000 wppm, or about 10 wppm to about 500 wppm, or about 50 wppm to about 300 wppm, or about 100 wppm to about 300 wppm, or about 200 wppm to about 300 wppm, or about 10 wppm to about 1000 wppm. In particular, the sulfur content is about 30 wppm to less than 1000 wppm, or about 50 wppm to less than 1000 wppm.

In aspects where a process flow includes an initial hydrotreatment process and/or a sour hydrocracking process, a feed can have a sulfur content of at least about 30 wppm. In particular, a feed can have a sulfur content of about 30 wppm to about 20000 wppm, or about 500 wppm to about 10000 wppm, or about 500 wppm to about 5000 wppm. Additionally or alternately, the nitrogen content of a feed is about 50 wppm to about 4000 wppm, or about 50 wppm to about 2000 wppm.

In some aspects, at least a portion of the feed can correspond to a feed derived from a biocomponent source. In this discussion, a biocomponent feedstock refers to a hydrocarbon feedstock derived from a biological raw material component, from biocomponent sources such as vegetable, animal, fish, and/or algae. Note that, for the purposes of this document, vegetable fats/oils refer generally to any plant based material, and can include fat/oils derived from a source such as plants of the genus Jatropha. Generally, the biocomponent sources can include vegetable fats/oils, animal fats/oils, fish oils, pyrolysis oils, and algae lipids/oils, as well as components of such materials, and in some embodiments can specifically include one or more type of lipid compounds. Lipid compounds are typically biological compounds that are insoluble in water, but soluble in nonpolar (or fat) solvents. Non-limiting examples of such solvents include alcohols, ethers, chloroform, alkyl acetates, benzene, and combinations thereof.

The hydrocarbon feedstream may be derived from crude oils, shale oils and tar sand as well as synthetic feeds and may be selected from hydrocarbon feedstreams having an initial boiling points of at least about 315°C. The hydrocarbon feedstream may be vacuum gas oil (VGO) feedstream.

The hydrocarbon feedstream may be a hydrocarbon fluid, a diesel boiling range feedstream, a lube oil boiling range feedstream, a whole or reduced petroleum crude, atmospheric residua, vacuum residua, propane deasphalted residua, dewaxed oil, slack wax, raffinate, or a mixture thereof.

The hydro-treated product may have an aromatics content at least 90%, or 91%, or 93%, or 95%, or 97% or 99%, lower than the aromatics content of the hydrocarbon feedstream.

The catalyst composition may have an aromatic saturation activity at least 10%, or 20%, or 30%, or 40%, or 50%, or 60%, or 70%, or 80%, higher than a catalyst composition merely comprising alumina as binder material.

## EXAMPLES

The following examples illustrate the improved effectiveness of the present invention, but are not meant to limit the present invention in any manner.

A series of binder materials, supported materials, and catalyst compositions were prepared for aromatic saturation activity testing. MCM-41 with a $Si/Al_2$ of 25/1 and a $Si/Al_2$ of 50/1 were prepared using the technique disclosed in U.S. Pat. No. 7,538,065.

**Example 1: Preparation of MCM-41 ($Si/Al_2$ ~ 25/1) bound with silica-alumina (SiAl) (inventive example)**

MCM-41 crystals having 30Å pores and a $SiO_2/Al_2O_3$ molar ratio of ~25/1 (prepared in accordance with the methods disclosed in U.S. Pat. No. 7,538,065), and Siral-40 HPV silica-alumina binder material (available from Sasol) were mulled in a weight ratio of 65:35 and formed into 1/16" cylindrical extrudates. Sufficient water was added to produce an extrudable paste with solids of about 43%. The prepared extrudates were dried at 250°F (120°C) before use. The dry extrudates were calcined at 1000°F (540°C) in air for 4 hours.

**Example 2: Preparation of MCM-41 (Si/Al$_2$ ~ 25/1) bound with silica-alumina (SiAl) (inventive example)**

MCM-41 crystals having 30Å pores and a SiO$_2$/Al$_2$O$_3$ molar ratio of ~25/1 (prepared in accordance with the methods disclosed in U.S. Pat. No. 7,538,065), and Siral-40 HPV silica-alumina binder material (available from Sasol) were mulled in a weight ratio of 35:65 and formed into 1/16" cylindrical extrudates. Sufficient water was added to produce an extrudable paste with solids of about 44%. The prepared extrudates were dried at 250°F (120°C) before use. The dry extrudates were calcined at 1000°F (540°C) in air for 4 hours.

**Example 3: Preparation of Nb modified MCM-41 (Si/Al$_2$ ~ 25/1) bound with silica-alumina (SiAl) extrudates (inventive example)**

MCM-41 crystals having 30Å pores and a SiO$_2$/Al$_2$O$_3$ molar ratio of ~25/1 (prepared in accordance with the methods disclosed in U.S. Pat. No. 7,538,065), and silica-alumina binder material prepared in Example 3 were mulled in a weight ratio of 50:50 and formed into 1/16" cylindrical extrudates. Sufficient water was added to produce an extrudable paste with solids of about 44%. The prepared extrudates were dried at 250°F (120°C) before use. The dry extrudates were calcined at 1000°F (540°C) in air for 4 hours.

**Example 4: Preparation of MCM-41 (Si/Al$_2$ ~ 50/1) bound with alumina extrudate (comparative example)**

MCM-41 crystals having a SiO$_2$/Al$_2$O$_3$ molar ratio of ~50/1 and a pore size of 30Å (prepared in accordance with the methods disclosed in U.S. Pat. No. 7,538,065), and VERSAL-300™ alumina (available from Honeywell UOP) were mixed in a weight ratio of 65:35 and formed into 1/16" cylindrical extrudates. Sufficient water was added to produce an extrudable paste. The prepared extrudates were dried at 250°F (120°C) for use. The dry extrudates were calcined at 1000°F (540°C) in air for 4 hours.

**Example 5: Group VIII noble metal impregnation of the extrudates**

The calcined extrudates from Examples 1-4 were then impregnated via incipient wetness with tetraamine complexes of platinum and palladium metal. A mixture of sufficient water to fill the entire pore volume of the material as well as platinum tetraamine and palladium tetraamine were added to the extrudate with enough concentration to achieve a metals concentration of 0.3 wt% Pt and 0.5 wt% Pd for Examples 1-3. The extrudate was then dried for 4 hours at ambient temperature and 4 hours at 250°F. After drying, the extrudate was calcined at 660°F for 3 hours in air to produce finely dispersed metal oxides on the catalyst surface.

**Example 6: Aromatic saturation activity test for hydrocarbon feedstream**

Performance of each exemplified catalyst composition as above for aromatic hydrocarbon saturation (hydrogenation) was determined in a high throughput experimental unit where multiple reactors were run at the same temperature. Vacuum gas oil (VGO) feedstream with properties listed in Table **1** was selected as a feed. A volume of 1.1 ml of each catalyst was loaded into 8 mm reactors followed by activation in-situ with hydrogen. The testing procedure flowed hydrogen and VGO feedstream at 2000 scf/bbl and a hydrogen partial pressure of 2000 psig at a temperature of 310°C. Aromatic saturation activity of the catalyst compositions was measured by ASTM D6591, and is represented by aromatic conversion of the hydrocarbon feedstream. The total aromatics in the product (TA) were measured by UV uptake. Aromatic conversion is calculated in accordance with the following formula:

$$\text{Aromatic conversion} = (\text{TA}_{\text{Feedstream}} - \text{TA}_{\text{Hydro-Treated Product}}) \times 100\ /\ \text{TA}_{\text{Feedstream}}.$$

**Table 1: Properties of Hydrocarbon Feedstream**

| Properties | VGO Feedstream |
|---|---|
| Total Aromatics (TA) | 16.3 wt% |
| Sulfur | 41 ppm |
| Nitrogen | < 10 ppm |
| Density | 0.83 g/ml |

(continued)

| Properties | VGO Feedstream |
|---|---|
| API | 30.37 |
| Pour Point | 35°C |

The percentage of TA content of the hydro-treated products is shown in Table 2. The 700°F+ conversion and wt% of total aromatics in the product at 280°C are shown in the table as well. At this condition, 700°F+ conversion for any of the catalyst compositions is around 1.5%. The relative aromatic reduction is determined in relation to the total aromatics in the product of Example 4. The samples that included MCM 41 with a lower $Si/Al_2$ ratio (Examples 1 and 3) show a significant increase in relative aromatic reduction. Example 3 with a higher ratio of binder material relative to MCM-41 shows the greatest benefit in aromatic saturation of 97.42% and high relative aromatic reduction of 111% comparing with Example 4.

**Table 2: Aromatic Saturation Activity Test for VGO Feedstream**

| Examples | Compositions of Catalyst | 700°F+ Conversion (%) | TA in Products (wt%) | Aromatic conversion (%) | Relative Aromatic Reduction (%) |
|---|---|---|---|---|---|
| 1 | 0.3% Pt - 0.5%Pd on 65/35 25:1 MCM-41/SiAl | 1.5 | 0.45 | 97.24 | 111 |
| 3 | 0.3% Pt - 0.5%Pd on 50/50 25:1 MCM-41/2%Nb SiAl | 1.6 | 0.42 | 97.42 | 111 |
| 4 | 0.3% Pt - 0.9%Pd on 65/35 50:1 MCM-41/ $Al_2O_3$ | 1.5 | 1.97 | 87.91 | NA |

**Example 7: Aromatic saturation activity test for hydrocarbon feedstream**

Performance of each exemplified catalyst composition as above for aromatic hydrocarbon saturation (hydrogenation) was determined in a high throughput experimental unit where multiple reactors were run at the same temperature. Vacuum gas oil (VGO) with properties listed in Table **3** was selected as a feed. A volume of 8 ml of the catalyst was loaded into 3/8" diameter reactors followed by activation in-situ with hydrogen. The testing procedure flowed hydrogen and VGO feedstream at 2000 scf/bbl and a hydrogen partial pressure of 2100 psig at a temperature of 220-280°C. Aromatic saturation activity of the catalysts was measured by ASTM D6591, and is represented by aromatic conversion of the hydrocarbon feedstream. The total aromatics in the product (TA) were measured by UV uptake. Aromatic conversion is calculated in accordance with the following formula:

$$\text{Aromatic conversion} = (TA_{\text{Feedstream}} - TA_{\text{Hydro-Treated Product}}) \times 100 / TA_{\text{Feedstream}}.$$

**Table 3: Properties of Hydrocarbon Feedstream**

| Properties | VGO Feedstream |
|---|---|
| Total Aromatics (TA) | 15.2 wt% |
| Sulfur | 12.2 ppm |
| Nitrogen | < 10 ppm |
| Density | 0.85 g/ml |
| API | 34 |

The percentage of TA content of the hydro-treated products is shown in Table 4. The 700°F+ conversion and wt% of total aromatics in the product at 280°C are shown in the table as well. At this condition, there was no 700°F+ conversion for any of the catalyst compositions. The relative aromatic reduction is determined in relation to the total aromatics in the product of Example 4. The samples that included MCM-41 with a lower $Si/Al_2$ ratio (Examples 1 and 2) show a significant increase in relative aromatic reduction. Example 2 with a higher ratio of binder material relative to MCM-41 shows the greatest benefit in aromatic saturation of 95.1% and high relative aromatic reduction of 118% comparing with Example 4.

Table 4: Aromatic Saturation Activity Test for VGO Feedstream

| Examples | Compositions of Catalyst | 700°F⁺ Conversion (%) | TA in Products (wt%) | Aromatic conversion (%) | Relative Aromatic Reduction (%) |
|---|---|---|---|---|---|
| 1 | 0.3% Pt - 0.5%Pd on 65/35 25:1 MCM-41/SiAl | 0 | 0.97 | 93.6 | 116 |
| 2 | 0.3% Pt - 0.5%Pd on 35/65 25:1 MCM-41/SiAl | 0 | 0.74 | 95.1 | 118 |
| 4 | 0.3% Pt - 0.9%Pd on 65/35 50:1 MCM-41/ $Al_2O_3$ | 0 | 2.96 | 80.5 | NA |

**Example 8: Determination of Collidine Uptake**

Collidine uptake of samples of the binder materials, supported materials, and catalyst compositions in the above examples was determined as the millimoles of collidine absorbed per gram of sample that is dried under nitrogen flow at 200°C for 60 minutes on a thermogravametric analyzer (Model Q5000, manufactured by TA Instruments, New Castle, Delaware). After drying the sample, the collidine was sparged over the sample for 60 minutes at a collidine partial pressure of 3 torr. The collidine uptake was calculated from the following formula:

(Weight of sample after sparging with collidine - Weight of dried sample) $\times$ $10^6$ $\div$ (Molecular Weight of collidine $\times$ Weight of dried sample);

When the weight of sample and the weight of dried sample is measured in grams, the molecular weight of collidine is 121.2 grams per millimole.

As shown in Table 5, the aromatic saturation activity of the catalysts show a clear trend with increasing collidine adsorption. A collidine uptake greater than 200 $\mu$mol/g is required for a high activity material.

Table 5: Collidine Uptake of the Catalyst Compositions

| Examples | Catalyst Compositions | Collidine Uptake ($\mu$mol/g) |
|---|---|---|
| 1 | 0.3% Pt - 0.5%Pd on 65/35 25:1 MCM-41/SiAl | 278 |
| 2 | 0.3% Pt - 0.5%Pd on 35/65 25:1 MCM-41/SiAl | 251 |
| 3 | 0.3% Pt - 0.5%Pd on 50/50 25:1 MCM-41/2%Nb SiAl | 330 |
| 4 | 0.3% Pt - 0.9%Pd on 65/35 50:1 MCM-41/ $Al_2O_3$ | 193 |

When numerical lower limits and numerical upper limits are listed herein, ranges from any lower limit to any upper limit are contemplated.

**Claims**

1.  Use of an inorganic, porous, mesoporous binder material that comprises at least silica and alumina for the preparation of a catalyst composition that further comprises:

a supported material, wherein the supporting material has a framework comprising silica and alumina in a molar ratio of silica to alumina of 10:1 to 50:1, has an average pore diameter of 15 to 40 Å, as measured by physisorption measurement, and has, in its calcined form, a X-ray diffraction pattern that has no peaks at positions less than 10 Å d-spacing with relative intensity greater than 10% of the strongest peak and has at least one peak with a d-spacing that corresponds to the $d_{100}$ value of the electron diffraction pattern of the material; and
a hydrogenation-dehydrogenation component, which is selected from the Group VIII noble metals and mixtures thereof;
wherein the catalyst composition has a collidine uptake at 200°C of greater than 150 $\mu$mol/g.

2. The use of claim 1, wherein the binder material is one or more of silica doped alumina, alumina doped silica, silicoaluminate, and any mixture thereof, preferably silica doped alumina or alumina doped silica.

3. The use of claim 1 or 2, wherein the catalyst composition has a collidine uptake at 200°C of greater than 250 μmol/g, preferably greater than 300 μmol/g, more preferably greater than 350 μmol/g.

4. The use of preceding claims, wherein the binder material has a collidine uptake at 200°C of greater than 100 μmol/g.

5. The use of preceding claims, wherein the supported material is MCM-41, preferably wherein the MCM-41 has a collidine uptake at 200°C of greater than 150 μmol/g.

6. The use of preceding claims, wherein the hydrogenation-dehydrogenation component is selected from the group consisting of palladium, platinum, rhodium, iridium, and mixtures thereof.

7. The use of preceding claims, wherein the catalyst composition is further modified with $X_2O_5$ or $XO_2$, and X is selected from the Group IV metal, preferably wherein X is selected from the group consisting of niobium, zirconium, and mixtures thereof.

8. The use of preceding claims, wherein the catalyst composition is further modified with sulfate.

9. The use of preceding claims, wherein the supported material and the binder material are present in a weight ratio of supporting material to binder material ranging from 95:5 to 5:95 and wherein the hydrogenation-dehydrogenation component is present in an amount ranging from 0.1 to 2.0 wt%.

10. The use of preceding claims, for the preparation of an aromatics hydrogenation catalyst composition.

11. The use of claim 10, further comprising:

   a) contacting a hydrocarbon feedstream that contains aromatics with the hydrogenation catalyst composition in the presence of a hydrogen-containing treat gas under effective aromatics hydrogenation conditions; and
   b) obtaining a hydro-treated product,

   wherein the sulfur content of the feed is less than 1000 wppm.

12. The use of claim 11, wherein the hydro-treated product has an aromatics content at least 90% lower than an aromatics content of the hydrocarbon feedstream, preferably at least 95% lower, more preferably at least 97% lower than an aromatics content of the hydrocarbon feedstream.

13. The use of claim 11 or 12, wherein the hydrocarbon feedstream is a hydrocarbon fluid, a diesel boiling range feedstream, a lube oil boiling range feedstream, a whole or reduced petroleum crude, atmospheric residua, vacuum residua, propane deasphalted residua, dewaxed oil, slack wax, raffinate, or a mixture thereof, preferably wherein the hydrocarbon feedstreams comprise 100 wppm or less of sulfur.

14. The use of preceding claims 11-13, wherein the effective hydrogenation conditions comprise: a temperature from 75°C to 425°C; a hydrogen partial pressure from 100 psig (0.7 MPa) to 3000 psig (20.7 MPa); a liquid hourly space velocity from 0.1 hr$^{-1}$ to 5 hr$^{-1}$ LHSV; and a hydrogen treat gas rate of from 35.6 m$^3$/m$^3$ to 1781 m$^3$/m$^3$ (200 SCF/B to 10,000 SCF/B).

**Patentansprüche**

1. Verwendung eines anorganischen, porösen, mesoporösen Bindemittelmaterials, das mindestens Siliciumdioxid und Aluminiumoxid umfasst, zur Herstellung einer Katalysatorzusammensetzung, die weiterhin umfasst:

   ein Trägermaterial, wobei das Trägermaterial ein Gerüst umfasst, das Siliciumdioxid und Aluminiumoxid in einem Molverhältnis von Siliciumdioxid zu Aluminiumoxid von 10:1 bis 50:1 enthält, einen durchschnittlichen Porendurchmesser von 15 bis 40 Å, gemessen mittels Physisorptionsmessung, aufweist und in seiner kalzinierten Form ein Röntgenbeugungsmuster aufweist, das keine Peaks bei Positionen mit einem d-Abstand von weniger als 10 Å und einer relativen Intensität von mehr als 10% des stärksten Peaks aufweist und mindestens einen Peak mit einem d-Abstand aufweist, der dem $d_{100}$-Wert des Elektronenbeugungsmusters des Materials entspricht; und

eine Hydrierungs-Dehydrierungskomponente, die aus Gruppe VIII- Edelmetallen und deren Mischungen ausgewählt ist;

wobei die Katalysatorzusammensetzung eine Collidin-Aufnahme bei 200 °C von mehr als 150 $\mu$mol/g aufweist.

2. Verwendung nach Anspruch 1, wobei das Bindemittelmaterial eines oder mehrere der folgenden Materialien ist: mit Siliciumdioxid dotiertes Aluminiumoxid, mit Aluminiumoxid dotiertes Siliciumdioxid, Siliciumaluminat und beliebige Mischungen davon, vorzugsweise mit Siliciumdioxid dotiertes Aluminiumoxid oder mit Aluminiumoxid dotiertes Siliciumdioxid.

3. Verwendung nach Anspruch 1 oder 2, wobei die Katalysatorzusammensetzung eine Collidin-Aufnahme bei 200 °C von mehr als 250 $\mu$mol/g, vorzugsweise mehr als 300 $\mu$mol/g, noch bevorzugter mehr als 350 $\mu$mol/g aufweist.

4. Verwendung nach einem der vorstehenden Ansprüche, wobei das Bindemittelmaterial eine Collidin-Aufnahme bei 200 °C von mehr als 100 $\mu$mol/g aufweist.

5. Verwendung nach einem der vorstehenden Ansprüche, wobei das Trägermaterial MCM-41 ist, vorzugsweise wobei das MCM-41 eine Collidin-Aufnahme bei 200 °C von mehr als 150 $\mu$mol/g aufweist.

6. Verwendung nach einem der vorstehenden Ansprüche, wobei die Hydrierungs-Dehydrierungskomponente aus der Gruppe ausgewählt ist, die aus Palladium, Platin, Rhodium, Iridium und Mischungen davon besteht.

7. Verwendung nach einem der vorstehenden Ansprüche, wobei die Katalysatorzusammensetzung weiter mit $X_2O_5$ oder $XO_2$ modifiziert ist und X aus der Gruppe der Gruppe IV-Metalle ausgewählt ist, vorzugsweise wobei X aus der Gruppe ausgewählt ist, die aus Niob, Zirkonium und Mischungen davon besteht.

8. Verwendung nach einem der vorstehenden Ansprüche, wobei die Katalysatorzusammensetzung zusätzlich mit Sulfat modifiziert ist.

9. Verwendung nach einem der vorstehenden Ansprüche, wobei das Trägermaterial und das Bindemittelmaterial in einem Gewichtsverhältnis von Trägermaterial zu Bindemittelmaterial im Bereich von 95:5 bis 5:95 vorliegen und wobei die Hydrierungs-Dehydrierungskomponente in einer Menge im Bereich von 0,1 bis 2,0 Gew.-% vorliegt.

10. Verwendung nach einem der vorstehenden Ansprüche zur Herstellung einer Katalysatorzusammensetzung zur Hydrierung von Aromaten.

11. Verwendung nach Anspruch 10, weiterhin umfassend:

a) Inkontaktbringen eines Kohlenwasserstoff-Einsatzstroms, der Aromaten enthält, mit der Hydrierungskatalysatorzusammensetzung in Gegenwart eines wasserstoffhaltigen Behandlungsgases unter wirksamen Aromatenhydrierungsbedingungen, und

b) Erhalten eines hydrobehandelten Produkts, wobei der Schwefelgehalt der Zufuhr weniger als 1000 Gew.-ppm beträgt.

12. Verwendung nach Anspruch 11, wobei das hydrobehandelte Produkt einen Aromatengehalt aufweist, der mindestens 90% niedriger ist als der Aromatengehalt des Kohlenwasserstoff-Einsatzstroms, vorzugsweise mindestens 95% niedriger, noch bevorzugter mindestens 97% niedriger als der Aromatengehalt des Kohlenwasserstoff-Einsatzstroms.

13. Verwendung nach Anspruch 11 oder 12, wobei der Kohlenwasserstoff-Einsatzstrom ein Kohlenwasserstofffluid, ein Einsatzstrom im Diesel-Siedebereich, ein Einsatzstrom im Schmieröl-Siedebereich, ein ganzes oder reduziertes Rohöl, atmosphärische Rückstände, Vakuumrückstände, Propandeasphaltierte Rückstände, entwachstes Öl, Rohparaffin, Raffinat oder eine Mischung davon ist, vorzugsweise wobei die Kohlenwasserstoff-Einsatzströme 100 Gew.-ppm oder weniger Schwefel enthalten.

14. Verwendung nach einem der vorstehenden Ansprüche 11 bis 13, wobei die wirksamen Hydrierbedingungen umfassen: eine Temperatur von 75°C bis 425°C; einen Wasserstoffpartialdruck von 100 psig (0,7 MPa) bis 3000 psig (20,7 MPa); eine stündliche Flüssigkeitsraumgeschwindigkeit von 0,1 hr$^{-1}$ bis 5 hr$^{-1}$ LHSV; und eine Wasserstoff-behandlungsgasrate von 35,6 m$^3$/m$^3$ bis 1781 m$^3$/m$^3$ (200 SCF/B bis 10.000 SCF/B).

**Revendications**

1. Utilisation d'un matériau liant inorganique, poreux, mésoporeux qui comprend au moins de la silice et de l'alumine pour la préparation d'une composition de catalyseur qui comprend en outre :

   un matériau supporté, le matériau supporté ayant une structure comprenant de la silice et de l'alumine en un rapport molaire de silice sur alumine de 10 : 1 à 50 : 1, un diamètre moyen de pore de 15 à 40 Å, tel que par une mesure de physisorption, et possède, sous sa forme calcinée, un diagramme de diffraction des rayons X qui ne possèdent pas de pics à des positions d'espacement d de moins de 10 Å avec une intensité relative supérieure à 10 % du pic le plus fort et possède au moins un pic avec un espacement d qui correspond à la valeur $d_{100}$ du diagramme de diffraction des électrons du matériau ; et un composant d'hydrogénation-déshydrogénation, qui est choisi parmi les métaux nobles du groupe VIII et des mélanges correspondants ;
   la composition de catalyseur ayant une absorption de collidine à 200 °C supérieure à 150 $\mu$mol/g.

2. Utilisation selon la revendication 1, le matériau liant étant l'un ou plusieurs parmi une alumine dopée par de la silice, une silice dopée par de l'alumine, un silicoaluminate, et un quelconque mélange correspondant, préférablement une alumine dopée par de la silice ou une silice dopée par de l'alumine.

3. Utilisation selon la revendication 1 ou 2, la composition de catalyseur ayant une absorption de collidine à 200 °C supérieure à 250 $\mu$mol/g, préférablement supérieure à 300 $\mu$mol/g, plus préférablement supérieure à 350 $\mu$mol/g.

4. Utilisation selon des revendications précédentes, le matériau liant ayant une absorption de collidine à 200 °C supérieure à 100 $\mu$mol/g.

5. Utilisation selon des revendications précédentes, le matériau supporté étant MCM-41, préférablement le MCM-41 ayant une absorption de collidine à 200 °C supérieure à 150 $\mu$mol/g.

6. Utilisation selon des revendications précédentes, le composant d'hydrogénation-déshydrogénation étant choisi dans le groupe constitué par le palladium, le platine, le rhodium, l'iridium et des mélanges correspondants.

7. Utilisation selon des revendications précédentes, la composition de catalyseur étant en outre modifiée par $X_2O_5$ ou $XO_2$, et X étant choisi parmi le métal du groupe IV, préférablement X étant choisi dans le groupe constitué par le niobium, le zirconium et les mélanges correspondants.

8. Utilisation selon des revendications précédentes, la composition de catalyseur étant en outre modifié avec un sulfate.

9. Utilisation selon des revendications précédentes, le matériau supporté et le matériau liant étant présents en un rapport en poids de matériau supporté sur matériau liant dans la plage de 95 : 5 à 5 : 95 et le composant d'hydrogénation-déshydrogénation étant présent en une quantité dans la plage de 0,1 à 2,0 % en poids.

10. Utilisation selon des revendications précédentes, pour la préparation d'une composition de catalyseur d'hydrogénation de composés aromatiques.

11. Utilisation selon la revendication 10, comprenant en outre :

    a) la mise en contact d'un flux d'alimentation d'hydrocarbure qui contient des composés aromatiques avec la composition de catalyseur d'hydrogénation en la présence d'un gaz de traitement contenant de l'hydrogène dans des conditions d'hydrogénation de composés aromatiques efficaces ; et
    b) l'obtention d'un produit hydrotraité,

    la teneur en soufre de la charge d'alimentation étant inférieure à 1 000 ppm en poids.

12. Utilisation selon la revendication 11, le produit hydrotraité ayant une teneur en composés aromatiques au moins 90 % inférieure à une teneur en composés aromatiques du flux d'alimentation d'hydrocarbure, préférablement au moins 95 % inférieure, plus préférablement au moins 97 % inférieure à une teneur en composés aromatiques du flux d'alimentation d'hydrocarbure.

13. Utilisation selon la revendication 11 ou 12, le flux d'alimentation d'hydrocarbure étant un fluide d'hydrocarbure, une charge d'alimentation à plage d'ébullition du diesel, une charge d'alimentation à plage d'ébullition d'huile lubrifiante, un brut de pétrole entier ou réduit, des résidus atmosphériques, des résidus sous vide, des résidus désasphaltés au propane, une huile déparaffinée, du gatsch, un raffinat ou un mélange correspondant, préférablement les flux d'alimentation d'hydrocarbure comprenant 100 ppm en poids ou moins de soufre.

14. Utilisation selon des revendications précédentes 11-13, les conditions d'hydrogénation efficaces comprenant : une température de 75 °C à 425 °C ; une pression partielle d'hydrogène de 100 psig (0,7 MPa) à 3 000 psig (20,7 MPa) ; une vitesse spatiale horaire de liquide de 0,1 h$^{-1}$ à 5 h$^{-1}$ LHSV ; et un débit de gaz de traitement à hydrogène allant de 35,6 m$^3$/m$^3$ à 1 781 m$^3$/m$^3$ (200 SCF/B à 10 000 SCF/B).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5573657 A
- US 5098684 A
- US 7538065 B

**Non-patent literature cited in the description**

- **CHEN et al.** Shape Selective Catalysis in Industrial Applications. *36 CHEMICAL INDUSTRIES*, 1989, 41-61